# EUROPEAN PATENT APPLICATION

(11) **EP 3 537 125 A1**
(43) Date of publication of application: **11.09.2019**
(21) Application number: 18159853.3
(22) Date of filing: 05.03.2018
(51) Int. Cl.: G01L 1/26, E04D 13/00, G01G 1/00

(54) **ROOF SENSOR SYSTEM**

(71) Applicant: SIKA TECHNOLOGY AG, 6340 Baar (CH)
(72) Inventor: CARL, Wilfried, CH - 8820 Wädenswil (CH); SCAMBOR, Harald, 6900 Bregenz (AT); KATHRINER, Roger, 6010 Kriens (CH); LOACKER, Marcus, 6973 Höchst (AT); TREMUEL, Eric, 6714 Nüziders (AT)
(74) Representative: Sika Patent Attorneys

(57) **Abstract**

A roof sensor system comprising a load sensor means, in particular pressure sensor mat, for sensing both static and dynamic load data of a load acting on a roof surface.

## Description

### Technical Field

The present invention relates to a roof sensor system, a method for determining a load on a roof, a roof system and a use of a roof sensor system.

### Technical Background

DE 20 2006 005 155 U1 discloses an arrangement with a sensor unit for detecting snow load and generating an electrical signal whose value is a measure for the snow load lying on a roof of a building. The sensor unit is arranged at or embedded into a lower surface of an insulating material layer. The system of DE 20 2006 005 155 U1 is limited with respect to available data.

US 2014/0230574 A1 discloses an impact-resistant surface-mounted roof sensor system. The system comprises a sensor adapted to sense a load incident thereon and a protective cover configured to span at least the width of the sensor in order to protect the sensor, e.g. to prevent larger hailstones or other objects from striking the sensor. Again, the data obtained by the method of US 2014/0230574 A1 is limited.

### Summary

It is an object of the present invention to propose a roof sensor system, a corresponding method for determining a load on a roof and a roof system, wherein detailed information of any incident on the roof surface can be achieved.

According to a first aspect of the present invention, a roof sensor system is proposed, comprising a load sensor means, in particular pressure sensor mat, (configured) for sensing both static and dynamic load data of a load acting on a roof surface.

A core idea of the invention is to provide a load sensor means (in particular load sensor element, in preferably pressure sensor mat) which is configured both for sensing static as well as dynamic load data of a load acting on a roof surface (i.e. for sensing both static and dynamic loads). Thereby, it is possible to provide data for different incidents such as a steady state with, for example, a layer of snow on the roof or dynamic incidents such as impact of hailstones. Surprisingly, this can be done with one and the same load sensor means (load sensor element). In particular, the same load sensor element (e.g. pressure sensor mat) can be used to obtain data regarding both static and dynamic loads (incidents).

The term "load" means, in particular, the load of any weight and/or force acting on the surface (area) of the roof (e.g. layer of snow, impacting hailstones, person). As far as a quantity (value) of the load is described, this quantity of the load can be defined as the (maximum) pressure of the load acting on the roof surface (at a certain point or area, respectively, of the roof surface). As such, the load may be measured as force per area (e.g. kN/m²).

The term "static load data" preferably means data of a load which is applied to a roof surface for at least one minute, preferably at least 30 minutes, further preferably at least 60 minutes. During the time of appliance, the load may not vary more than +/- 20%, preferably +/- 10%, further preferably +/- 1% from a value of the load at a starting point of the respective period of time. On the other hand, dynamic load data means preferably data of a load which is applied only for a short period such as less than 1 minute or less than 10 seconds or less than 1 second, or even less than 0.1 second or even less (for example, in the case of impact of hailstone). The dynamic load data may be load data with a comparatively rapid change of the value of the load. A maximum load value of a dynamic load may be (for example, within a period of 1 minute or within a period of 1 second or within a period of 0.1 seconds or even a shorter period) more than 50% above the minimum value in the respective time period (under consideration). A dynamic impact load is preferably a load which is applied for a very short period, e.g. for less than 0.1, in particular less than 0.01, further preferably less than 0.001 seconds. A dynamic non-impact related load (e.g. due to trespassing) is preferably a load which is applied for a period of at least 0.01 seconds, further preferably at least 0.05 seconds, even further preferably at least 0.1 seconds.

The roof sensor system is, in particular, configured for being used in the environment of a roof (of a building). The roof sensor system may be configured to resist humidity and/or liquid water and/or solid water (snow and/or ice) and/or sunlight and/or the weight of a (walking) person. In particular, the roof sensor system may comprise a protecting cover for protecting against humidity and/or liquid water and/or solid water (snow and/or) and/or sunlight and/or trespassing.

The load sensor means (element) is preferably formed of a coherent structure (one-piece-structure; not necessarily monolithic) and/or has a weight of less than 100 kg, preferably less than 20 kg.

According to the invention, exceptional load situations on a roof can be monitored, such as a (high) static load by solid water (e.g. snow and/or ice) or (ponding) liquid water, or a (high) dynamic load, such as hail or trespassing. In particular, the system can differentiate between a particular static load (e.g. snow), and an impact-type dynamic load (e.g. hail), and a general (non-impact-like) dynamic load (e.g. trespassing).

Preferably, the system comprises a (preferably wireless) communication system that is configured to provide a warning, e.g. by email, text message, or any other suitable communication channel. This allows an addressee of the warning (e.g. building owner or facility manager) to react (immediately) on the warning, e.g. by removing the excess snow load, or by a roof inspection after hail warning, in order to check for integrity of the roof structure (e.g. puncture of a roofing membrane). In comparison with the prior art, the inventive approach is less limited regarding its functionality. At least some potential errors can be avoided due to a measurement, or differentiation respectively, of dynamic and static loads. In particular, by use of a sensor mat, a mechanical malfunction is less likely. Moreover, in particular ponding water can be detected.

In general, it is not necessary to invest in several systems with different communication systems (and a high risk of false alarm) which is comparatively costly due to unnecessary roof inspections In addition, it is, in particular, possible to detect trespassing (and provide a corresponding warning, preferably). This is not achieved by the existing systems of the prior art.

Preferably, the roof sensor system comprises a processing means (processing device) for generating evaluated data by evaluating the static and/or dynamic load data, in particular by comparing the data with (a) predetermined threshold(s). Such processing means may comprise a (micro-) processor and/or storage means and/or input/output means. The processing means and the load sensor means (pressure sensor mat) may be part of the same assembly. Alternatively, the processing means and load sensor means may be part of different assemblies (meaning, e.g. that between the processing means and the pressure sensing means, a certain distance, of e.g. at least 1 metre or at least 10 metre is established). The processing means allows for performing any calculation/processing steps necessary in order to determine and/or evaluate the data from the load pressure sensor. On the other hand, the load sensor means as such has a certain advantage because it allows for obtaining the corresponding information, which can also be further evaluated by an external processing means. Therefore, the provision of the pressure sensor means alone has a certain advantage over the prior art.

A communication means may be provided in order to communicate the data from the load sensor means and/or the processing means to a receiving device (which may be, if data is communicated from the load sensor means, the abovementioned processing means or any further processing means). For example, whenever a pre-defined threshold is exceeded, the communication means may be configured to send a message on a (pre-defined) communication channel (text message, email, for example) so that a responsible person (e.g. building owner or responsible facility manager) can take appropriate action, e.g. schedule maintenance of the roof. Alternatively, or in addition to a communication means, the roof sensor system may comprise a storage means for storing any sensed data. However, in particular if the pressure sensor system has an output for retrieving the measured data, this would allow to connect a communication means and/or processing means in order to further distribute and/or forward and/or process the data.

The communication means may comprise a gateway (on the roof). Optionally, several load sensor means (elements), in particular pressure sensor mats, may be connected with the communication means (in particular, its gateway), e.g. wire-connected or wireless. The receiving device may be, in particular, a cloud based loT (Internet of Things) platform.

The communication may be performed via mobile (phone) network (e.g. 2G, 3G, 4G, LTE) and/or LoRa (Long Range Wide Area Network). In general, the communication is not limited with respect to range (i.e. at least substantially, global). At the loT platform (device management application) the data may be evaluated and displayed as load information. Optionally, clients can retrieve data from the loT platform, in particular via internet. The loT platform may also send (defined) information via (known) communication channels.

The processing means and/or communication means may be provided on the roof, either as separated parts with respect to the load sensor means (element) or assembled with the load sensor means.

The load sensor means (element) and/or processing means may be configured to measure at least one of the following, in particular to measure (and differentiate between) at least two of the following: dynamic impact load, in particular caused by hail, static load, in particular caused by solid (snow or ice) and/or liquid (e.g. ponding) water, and general dynamic (non-impact related) load, in particular caused by trespassing. In particular, the load sensor means and/or processing means may be configured to differentiate between or determine, respectively, a first load which is applied for a duration of time below a first threshold (being, e.g., 0.1 seconds or less), a second load which is applied for a longer duration (above the first threshold but below a second threshold of e.g. 1 second or more) and a third (static) load which is applied for a longer time (at least above the second threshold, e.g. above 1 min or more). Based on this, the load sensor means and/or processing means may be determined whether the load is a dynamic impact load, a (general) impact load or a static load. Thereby, a variable system can be achieved.

The roof sensor system may comprise a power supply, in particular a, preferably rechargeable (or non-rechargeable), battery, and/or a solar electric power generating means (including, for example a solar module or solar cell) and/or a wind electric power generating means (such as a wind turbine) and/or a Peltier device (element). Thereby, an autonomous power supply can be achieved.

Preferably, the load sensor means (load sensor element) comprises at least one resistivity type sensor means, such as a strain gauge sensor and/or a piezo electric sensor. Alternatively or in addition, the load sensor means may comprise at least one capacity type sensor means (including at least two electrodes).

The load sensor means (load sensor element), in particular pressure sensor mat may comprise at least two sensor devices, in particular at least 10 sensor devices. Each sensor device is preferably capable of sensing the load (pressure) at a certain location. The sensor devices may be arranged in a regular pattern, e.g. in several rows and columns. Each (single) sensor device is preferably capable of sensing both static and dynamic load (pressure) data.

The load sensor means, in particular pressure sensor mat, may cover (or may be configured to cover) a surface of at least 100 cm², preferably at least 250 cm², further preferably at least 1000 cm² (of a roof surface).

Furthermore, the load sensor means (element), in particular pressure mat, may cover a surface of not more than 50 000 cm², preferably not more than 22 500 cm², further preferably not more than 10 000 cm².

The load sensor means, in particular pressure sensor mat, may have a thickness of less than 5.0 mm, preferably less than 1.5 mm (on average or at maximum).

The load sensor means (element), in particular pressure sensor mat, may be sealed in a bag, preferably made of plastic, optionally together with at least part of the processing means. The load sensor means (element), in particular pressure sensor mat, may have a rectangular, e.g. a square shape. The size of the load sensor means (element), in particular pressure sensor mat, may be between 20 cm x 20 cm and 150 cm x 150 cm (and may be positioned where appropriate). In particular, if trespassing is one mode of detection, the load sensor means, in particular pressure sensor mat may be positioned near a roof entrance. It should be taken care that snow and hail can reach the load sensor means (in particular pressure sensor mat). Optionally, several load sensor means (in particular load sensor elements, preferably pressure sensor mats), e.g. at least 2 or at least 5 or at least 10 load sensor means (in particular load sensor elements, preferably pressure sensor mats) may be distributed on the roof. A distance between each of the plurality of load sensor means to the respective nearest neighbour may be at least 50 cm, preferably at least 2 m.

The load sensor means (pressure sensor mat) may be laid on top of an (existing) roofing, in particular flat roofing structure. A suitable piece (of identical or similar) roofing membrane may be bonded (welded or glued) on top of the load sensor means (pressure sensor mat), in particular such that the whole load sensor means (pressure sensor mat) is completely covered (optionally except for an outlet for wiring). An outlet of a wiring may be sealed with a suitable sealing mass, e.g. Sikaseal® (structure as of filing or earliest priority date of this application). Similarly, any required (electronic) hardware may be protected from the outside.

In order to improve signal accuracy, a (thin) in particular conductive (preferably metallic) baseplate can be arranged below the load sensor means, in particular pressure sensor mat.

The sensor means can be based on any suitable electric principle, such as a change in resistivity under load (strain gauge, piezo-electric sensor), or a change in electric capacity under load. A summary can for example be found in Charles Platt, Encyclopaedia of Electronic Components, Volume III: Sensors, O-Riley Media, Inc., USA, 2016. Preferably, the load sensor means is designed as a load sensor mat, for example as distributed by Plastic Electronic GmbH, under the term "load skin pressure sensor mats" (see: https://plastic-electronic.com/load skin-pressure-sensor-mats/ in its version at the filing date and/or in its last available version before or at the filing date via https://archive-org/web/ and/or its version of January 17, 2018).

For example, the pressure sensor mat may comprise a cover film with electrodes, a base film with electrodes and an in-between dielectric layer. Measuring points (single detecting devices) may be formed at crossing points of bottom electrodes with cover electrodes.

The load sensor means (pressure sensor mat) may provide an (electric) signal whenever the load (pressure) changes. The signal may be resistance and/or capacity, depending on the type of sensor. For the respective (three) application cases, a calibration procedure may be performed as follows.

For snow and/or ponding water detection, a pressure threshold (kN/m²) may be defined which may be determined by the load bearing capacity of the roof construction. The load sensor means (pressure sensor mat) or a corresponding ( in particular identical) load sensor means (e.g. prototype), optionally including a metal plate and a cover (membrane), may be loaded with identical weight per area (preferably corresponding to the load bearing capacity of the roof construction). A signal strength may then determine a threshold value. Whenever this threshold value is exceeded for 60 minutes or longer (for example), an alarm message may be sent out by the system.

For hail detection, a lab hail test (e.g. according to DIN EN 12975-2, validity at the filing date or earliest priority date of this application) or a comparable representative test may be carried out with the load sensor means (or a corresponding (in particular identical) load sensor means, e.g. prototype). The signal threshold may be fixed according to a desired hail intensity. For example, an impact energy per hail particle of 10 J or more and an impact time of 1 ms or less may be considered as appropriate (because under these conditions severe damage of buildings can be expected). However, any individual threshold can be defined.

For trespassing detection, trespassing can be simulated for a load sensor means (or a corresponding (identical) load sensor means, e.g. prototype) by people walking onto the load sensor means (pressure sensor mat) and using the signal as threshold. In general, all dynamic impacts (optionally above a predetermined pressure load threshold (exceeding a predetermined threshold/signal strength)) with a duration between 0.1 seconds and 10 seconds can be considered as trespassing.

In general, the load sensor means sensor means (or a corresponding (identical) load sensor means, e.g. prototype) and/or the processing means may be configured to measure/evaluate a dynamic load, applied for a duration of more than 0.1 seconds and/or less than 10 seconds.

Moreover, the load sensor means (or a corresponding (identical) load sensor means, e.g. prototype) and/or the processing means may be configured to measure/evaluate a dynamic impact load, applied for an impact time of less than 0.010 seconds preferably less than 0.001 seconds.

The load sensor means (or a corresponding (identical) load sensor means, e.g. prototype) and/or the processing means may be configured to measure/evaluate a static load, applied for a duration of at least one minute, preferably at least 60 minutes.

As far as any "load" is mentioned (above or below), this "load" may be understood as a load exceeding a predetermined threshold (in particular any substantial, at least measurable, load). Such threshold can be determined by a measuring sensitivity of the load sensor means and/or can be predefined (in particular above the measuring sensitivity), e.g. during a calibration procedure. The corresponding threshold(s) for the static, (general) dynamic and dynamic impact load data may be different or the same. In this regard, if, for example, a duration of the load appliance is described, this may be understood as duration during which the load (pressure) exceeds the predefined threshold. Such a threshold may help to avoid that any events which are not of interest are detected and provoke unnecessary data or even false alarms.

The roof sensor system may be configured so that all data from the load sensor means may be communicated to an external receiving device (e.g. loT platform, for example directly or via a gateway, in particular common for several load sensor means/elements). Alternatively, the roof sensor system may be configured so that only filtered and/or evaluated data, e.g. data exceeding a predetermined threshold, from the load sensor means and/or the processing means is communicated to an external receiving device.

According to a further aspect of the invention, a method for determining a load on a roof is proposed, comprising: providing a roof sensor system of the pre-described kind and sensing both static and dynamic load data of the load acting on a roof surface.

The method may comprise any method steps which may be derived from the description of the (in particular functional) features of the roof sensor system. In particular, the method may comprise measurements of at least one of the following, in particular at least two of the following: dynamic impact load, in particular caused by hail, static load, in particular caused by solid and/or liquid water, and dynamic (non-impact related) load, in particular caused by trespassing. The method may further, in particular, comprise measurement or evaluation of a dynamic load applied for a duration of more than 0.1 seconds and/or less than 10 seconds and/or measurement and/or evaluation of a dynamic impact load applied for an impact time of less than 0.010 seconds, preferably less than 0.001 seconds (and, preferably, more than 0.1 µs or more than 0.5 µs) and/or measurement and/or evaluation of a static load applied for a duration of at least 1 minutes, preferably at least 60 minutes.

According to a further aspect of the invention, a roof system is proposed, comprising a roof, in particular flat roof, and at least one roof sensor system of the pre-described kind.

According to another aspect of the invention, a building with the above roof system is proposed.

In the above roof system, the (or at least one of optionally several) load sensor means/element(s), in particular pressure sensor mat(s), may be located close to a roof entrance, in particular directly at the roof entrance or in a distance of less than 50 cm, preferably less than 20 cm. The roof entrance is preferably a door or any other (closable) opening through which a person may enter the roof surface from below the roof.

According to another aspect of the invention, a use of a roof sensor system, including a pressure sensor mat in particular of the pre-described kind, is proposed for sensing static and/or dynamic load data of a load acting on a roof surface. By providing a pressure sensor mat, an efficient and reliable measurement of static and/or dynamic load data can be achieved.

Preferably, a pressure sensor mat is used in combination with a data processing and communication system, in particular in order to detect snow load, hail impact, and trespassing on a roof. A warning may be sent to a responsible person (building owner or responsible maintenance manager). Surprisingly, it has been found that in particular a combination of signal strength and signal duration yields detailed information to reliably differentiate between the different load situations.

The load sensor means (pressure sensor mat) is in particular configured to monitor any change of the load (pressure) in time. Preferably, the load sensor means (pressure sensor mat) is configured to measure a time dependency of the load in intervals of less than 1 ms, preferably less than 0.1 ms, further preferably less than 0.001 ms. This way, the system may differentiate between a static load, which may be defined by a load (above a predefined threshold) for more than (for example) 60 minutes and a dynamic load (above a predetermined threshold), which may define the case of (for example) hail impact if a defined load (above a predetermined threshold) is measured for less than 1 microsecond (for example), or trespassing, if a defined load is measured between (for example) 0.1 seconds and 10 seconds. In each case, a predefined message, such as a text message, email, automated call, etc. may be sent to at least one person to inform about (unusual) load situations on the roof.

The load sensor means (pressure sensor mat) is in particular configured to measure the magnitude of the load (pressure), preferably in time. The pressure sensor means and/or processing means may (in addition or alternatively) be configured to measure/determine any variation (in particular the rate of change of the magnitude/quantity of the load (pressure) or, in particular, a derivative of the measured quantity).

### Brief Description of the Drawings

In the following, a preferred embodiment of the present invention is described with reference to the drawings. These show:
- Fig. 1: Roof with roof sensor system in a top view;
- Fig. 2: The roof with the roof sensor system of Fig. 1 in a cross section;
- Fig. 3: A diagram showing the snow load depending on time;
- Fig. 4: A diagram showing a hail impact depending on time;
- Fig. 5: A diagram showing trespassing depending on time.

### Detailed Description of the Embodiment

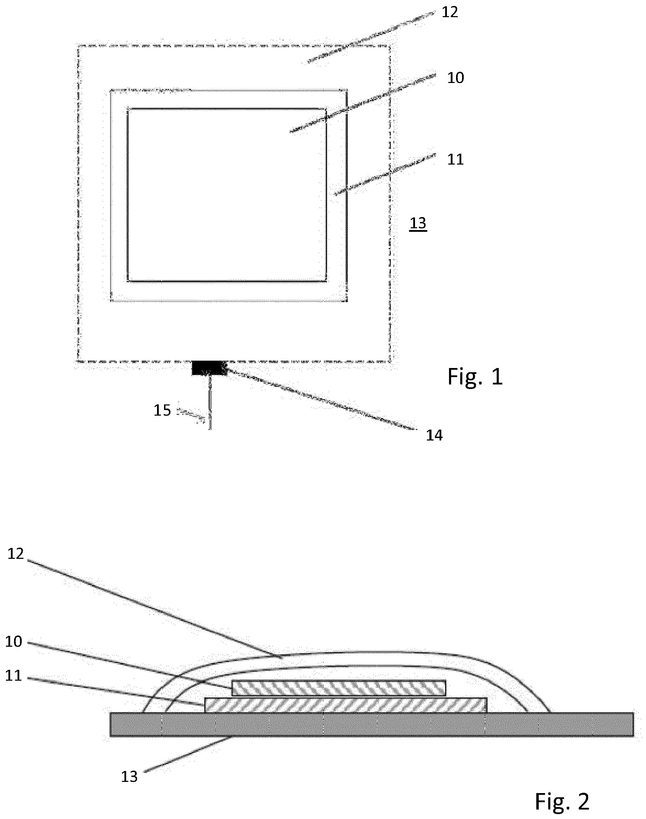

Fig. 1 shows a top view of a roof with a roof sensor system according to the invention. Fig. 2 shows a corresponding cross section.

A pressure sensor mat 10 is arranged on a metal plate 11. Metal plate 11 and sensor mat 10 are covered by a membrane 12. The metal plate 11 is arranged on a roof surface 13. The pressure sensor mat is connected to the outside (with respect to the membrane 12) via a wiring 15 through a wiring outlet sealed by a sealing 14.

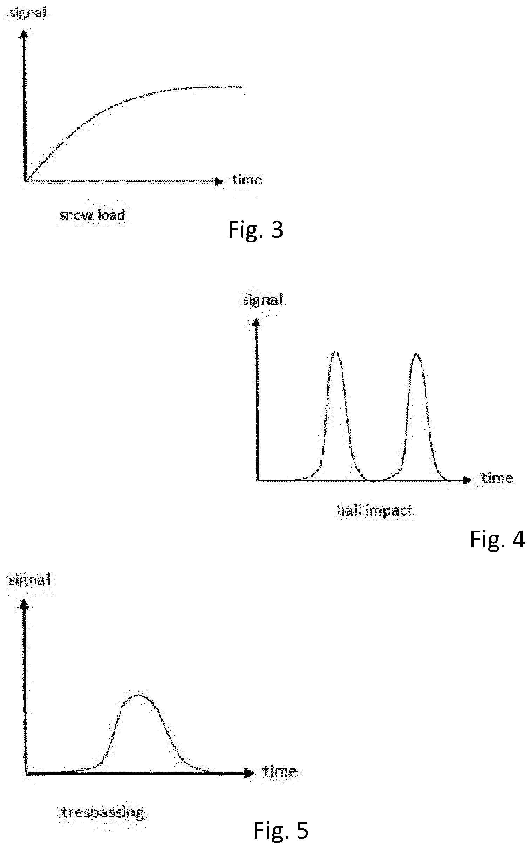

Fig. 3 shows a static load signal, in this case the signal of a snow load (which has an at least substantially steady state at least after a certain time when the snowfall stops). Fig. 4 shows a dynamic impact load, in this case a hail impact. Fig. 4 shows a dynamic load, in this case caused by trespassing.

If, in Fig. 3, a predetermined threshold value of the load (the pressure) is exceeded for a predetermined time period of for example 60 minutes or longer, an alarm message may be sent out by the system.

If, in Fig. 5, a load is recognised for a time period which exceeds a first time threshold but which is below a second time threshold (wherein the first time threshold may be for example 0.1 seconds or more and the second time threshold may be for example 10 seconds or less), again a corresponding message can be sent out by the system.

In the case of Fig. 4, if an impact load is detected which has a duration of less than a predetermined threshold (wherein the threshold may be for example 0.001 seconds), again a corresponding message (for example "hail impact") may be sent out.

### Reference signs:

- 10: Pressure sensor mat
- 11: Metal plate
- 12: Membrane
- 13: Roof surface

## Claims

1. A roof sensor system comprising a load sensor means (10), in particular pressure sensor mat, for sensing both static and dynamic load data of a load acting on a roof surface (13).

2. The roof sensor system of claim 1, comprising a processing means for generating evaluated data by evaluating the static and/or dynamic load data, in particular by comparing the data with (a) predetermined threshold(s) and/or
a communication means to communicate the data from the load sensor means and/or the processing means to a receiving device.

3. The roof sensor system of claim 1 or 2, wherein the load sensor means (10) and/or processing means is configured to measure at least one of the following, in particular to differentiate between at least two of the following: dynamic impact load, in particular caused by hail, static load, in particular caused by solid and/or liquid water, and dynamic non-impact related load, in particular caused by trespassing.

4. The roof sensor system of one of the preceding claims, comprising a power supply, in particular a, preferably rechargeable, battery, and/or a solar electric power generating means and/or a wind electric power generating means and/or a Peltier element.

5. The roof sensor system of one of the preceding claims, wherein the load sensor means (10) comprises at least one resistivity type sensor means, in particular a strain gauge sensor and/or piezo electric sensor, and/or at least one capacity type sensor means, including at least two electrodes.

6. The roof sensor system of one of the preceding claims, wherein the load sensor means (10), in particular pressure sensor mat:
- comprises a plurality of at least two sensor devices, in particular at least ten sensor devices, and/or
- covers a surface of at least 100 cm², preferably at least 225 cm², further preferably at least 1000 cm² and/or
- covers a surface of not more than 50000 cm², preferably not more than 22500 cm², further preferably not more than 10000 cm² and/or
- has a thickness of less than 5.0 mm, preferably less than 1.5 mm and/or
- is sealed in a bag, preferably made of plastic, optionally together with at least part of the processing means.

7. The roof sensor system of one of the preceding claims, comprising a cover, in particular roofing membrane (12), covering the load sensor means (10) and/or comprising an, in particular conductive, preferably metallic, base plate (11) below the load sensor means.

8. The roof sensor system of one of the preceding claims, wherein the load sensor means and/or the processing means is/are configured to measure/evaluate a dynamic load applied for a duration of more than 0.1 s and/or less than 10 s and/or
wherein the load sensor means and/or the processing means is/are configured to measure/evaluate a dynamic impact load applied for an impact time of less than 0.010 s, preferably less than 0.001 s and/or
wherein the load sensor means and/or the processing means is/are configured to measure/evaluate a static load applied for a duration of at least 1 minute, preferably at least 60 minutes.

9. The roof sensor system of one of the preceding claims, wherein the roof sensor system is configured so that all data from the load sensor means is communicated to an external receiving device or
wherein the roof sensor system is configured so that only filtered and/or evaluated data,in particular, data exceeding a predetermined threshold, from the load sensor means and/or the processing means is communicated to an external receiving device.

10. A method for determining a load on a roof, comprising: providing a roof sensor system of one of the preceding claims and sensing both static and dynamic load data of the load acting on a roof surface.

11. The method of claim 10, comprising measurement of at least one of the following, in particular at least two of the following: dynamic impact load, in particular caused by hail, static load, in particular caused by solid and/or liquid water, and dynamic non-impact related load, in particular caused by trespassing.

12. The method of claim 10 or 11, comprising measurement or evaluation of a dynamic load applied for a duration of more than 0.1 s and/or less than 10 s and/or
measurement and/or evaluation of a dynamic impact load applied for an impact time of less than 0.010 s, preferably less than 0.001 s and/or measurement and/or evaluation of a static load applied for a duration of at least 1 min, preferably at least 60 min.

13. Roof system, comprising a roof, in particular flat roof, and at least one roof sensor system of one of the preceding claims 1 to 9.

14. The roof system of claim 13, wherein the - or at least one of optionally several - load sensor means (10), in particular pressure sensor mat(s), is located close to a roof entrance, in particular directly at the roof entrance or in a distance of less than 50 cm, preferably less than 20 cm.

15. Use of a roof sensor system including a pressure sensor mat (10), in particular according to one of the preceding claims 1 to 9, for sensing static and/or dynamic load data of a load acting on a roof surface (13).
